# EUROPEAN PATENT APPLICATION

(11) **EP 4 763 775 A1**
(43) Date of publication of application: **24.06.2026**
(21) Application number: 24917892.2
(22) Date of filing: 02.04.2024
(51) Int. Cl.: B65H 37/04

(54) **PAPER STRIPPING APPARATUS, PAPER STRIPPING METHOD, ADHESIVE PASTING DEVICE, AND ADHESIVE PASTING METHOD**

(30) Priority: 15.01.2024 CN 202410051829
(71) Applicant: Contemporary Amperex Technology Co., Limited, Ningde, Fujian 352100 (CN)
(72) Inventor: WU, Kai, Ningde, Fujian 352100 (CN); WANG, Youshan, Ningde, Fujian 352100 (CN); GUO, Deyi, Ningde, Fujian 352100 (CN); LI, Bingchao, Ningde, Fujian 352100 (CN)
(74) Representative: Lorenz Seidler Gossel Part. mbB
(86) International application number: PCT/CN2024/085657
(87) International publication number: WO 2025/152276

(57) **Abstract**

A paper stripping apparatus, a paper stripping method, an adhesive pasting device, and an adhesive pasting method are disclosed. The paper stripping apparatus is configured to perform a paper stripping operation on at least two sheets. The paper stripping operation includes a paper stripping action of stripping release paper from an adhesive surface and a detection action of detecting whether the release paper after the paper stripping action has been completely stripped or not. The paper stripping apparatus includes a base, a paper stripping mechanism, a first detection camera, and a second detection camera. The paper stripping mechanism is configured to perform the paper stripping action on the at least two sheets sequentially arranged along a first direction. The second detection camera is located on a side of the first detection camera along the first direction. The first detection camera and the second detection camera are configured to be able to approach or move away from each other so that each of the sheets is within shooting fields of view of the first detection camera and the second detection camera. The first detection camera and the second detection camera are configured to jointly perform the detection action on the multiple sheets.

## Description

### CROSS-REFERENCE TO RELATED APPLICATIONS

This disclosure is based on Chinese patent application with application number 202410051829.8, filed on January 15, 2024, and entitled "PAPER STRIPPING APPARATUS, PAPER STRIPPING METHOD, ADHESIVE PASTING DEVICE, AND ADHESIVE PASTING METHOD", and claims priority to the Chinese patent application, the entire contents of which are incorporated herein by reference.

### TECHNICAL FIELD

This disclosure relates to the technical field of battery manufacturing, and in particular to a paper stripping apparatus, a paper stripping method, an adhesive pasting device, and an adhesive pasting method.

### BACKGROUND

New energy batteries are increasingly widely used in daily life and industry. For example, new energy vehicles equipped with batteries have been widely used, and batteries are also increasingly applied in fields such as energy storage.

A battery module is composed of multiple battery cells. In the production and manufacturing process of the battery module, especially during the grouping process of batteries, it is usually necessary to adhere thermal insulation pads or double-sided adhesives to the battery cells. Improving the adhesion efficiency is an important aspect of improving the grouping efficiency of the battery module. The adhesion process of the thermal insulation pads or double-sided adhesives requires first stripping off release paper, then detecting whether the release paper has been completely stripped or not, and thereafter adhering the fully exposed adhesive surface to the battery cell. Therefore, improving the efficiency of release paper detection is one of the important measures to improve the efficiency of the adhesion process.

In addition, since battery modules usually include multiple models, the thermal insulation pads or double-sided adhesives requiring release paper to be stripped off have multiple specifications. Therefore, how to improve the compatibility of release paper detection without reducing the efficiency of release paper detection is one of the research topics in the industry.

### SUMMARY

To solve the above technical problems, this disclosure provides a paper stripping apparatus, a paper stripping method, an adhesive pasting device, and an adhesive pasting method, for improving the compatibility of release paper detection without reducing the efficiency of release paper detection.

This disclosure is implemented through the following technical solutions.

A first aspect of this disclosure provides a paper stripping apparatus configured to perform a paper stripping operation on at least two sheets, where the sheet has an adhesive surface covered by release paper. The paper stripping operation includes a paper stripping action of stripping the release paper from the adhesive surface and a detection action of detecting whether the release paper after the paper stripping action has been completely stripped or not. The paper stripping apparatus includes: a base; a paper stripping mechanism disposed on the base, where the paper stripping mechanism is configured to perform the paper stripping action on the at least two sheets sequentially arranged along a first direction; a first detection camera disposed on the base; and a second detection camera disposed on the base and located on a side of the first detection camera along the first direction, where the first detection camera and the second detection camera are configured to be able to approach or move away from each other so that each of the sheets is within shooting fields of view of the first detection camera and the second detection camera. The first detection camera and the second detection camera are configured to jointly perform the detection action on the multiple sheets.

When the paper stripping apparatus is used for paper stripping operations, the paper stripping mechanism performs the paper stripping action on the at least two sheets sequentially arranged along the first direction. The first detection camera and the second detection camera approach or move away from each other so that each of the sheets is within the shooting fields of view of the first detection camera and the second detection camera, and the first detection camera and the second detection camera jointly perform the detection action on the multiple sheets.

The first detection camera and the second detection camera can simultaneously detect multiple sheets, which can improve the efficiency of release paper detection. When replacing with larger-sized sheets and performing the paper stripping operation on the larger-sized sheets, the spacing between the first detection camera and the second detection camera can be increased, to enlarge the shooting fields of view of the first detection camera and the second detection camera, so that at least two sheets are within the shooting fields of view, thereby improving the compatibility of release paper detection without reducing the efficiency of release paper detection. Moreover, when replacing with smaller-sized sheets and performing the paper stripping operation on the smaller-sized sheets, the spacing between the first detection camera and the second detection camera can be reduced, to reduce the shooting fields of view of the first detection camera and the second detection camera, and enlarge the overlapping shooting field of view of the first detection camera and the second detection camera, so that a sheet located in the overlapping shooting field of view is detected by both the first detection camera and the second detection camera, which is beneficial to improving detection accuracy.

In some embodiments, the shooting field of view of the first detection camera is a first shooting field of view, the shooting field of view of the second detection camera is a second shooting field of view, the first shooting field of view and the second shooting field of view jointly form a shooting range and the first shooting field of view and the second shooting field of view have an overlapping portion, and each of the sheets is within the shooting range.

The first shooting field of view of the first detection camera and the second shooting field of view of the second detection camera have an overlapping portion, so the shooting range formed thereby is continuous, reducing the possibility of affecting detection accuracy due to a gap between the first shooting field of view and the second shooting field of view. Moreover, at least a portion of the sheets can be located in the overlapping portion of the first shooting field of view and the second shooting field of view, so that the sheet in the overlapping portion is detected by both the first detection camera and the second detection camera, which is beneficial to improving detection accuracy.

In some embodiments, the first detection camera and the second detection camera approach or move away from each other so that a midpoint between the first detection camera and the second detection camera is located in a median plane of a region occupied by all the sheets.

In this way, the first detection camera and the second detection camera are capable of approaching or moving away from each other to achieve a state of being centrally aligned with all the sheets, so that the first detection camera and the second detection camera can shoot all the sheets while maximizing the overlapping portion of the first shooting field of view and the second shooting field of view, thereby further improving detection accuracy.

In some embodiments, the paper stripping apparatus further includes a control module, the control module determines a position of the median plane based on a position and size of the sheet in the first direction, calculates a distance that the first detection camera and/or the second detection camera needs to move based on positions of the first detection camera and the second detection camera, and controls the first detection camera and/or the second detection camera to move.

The provision of the control module realizes automation of the movement control of the first detection camera and/or the second detection camera, thereby improving the accuracy and efficiency of position adjustment of the first detection camera and/or the second detection camera.

In some embodiments, along the first direction, the sheet at the head is a first sheet, the sheet at the tail is a second sheet, an end surface of the first sheet away from the second sheet is a first reference surface, an end surface of the second sheet away from the first sheet is a second reference surface, and a plane at an intermediate position between the first reference surface and the second reference surface is the median plane; and the control module calculates a position of the median plane based on positions of the first reference surface and the second reference surface.

The spacing between the first reference surface and the second reference surface is the total length of the region where all the sheets are located in the first direction, so the position of the midpoint of the total length can be accurately calculated, thereby improving the accuracy of determining the median plane.

In some embodiments, the first detection camera is fixedly disposed on the base, and the second detection camera is disposed on the base and capable of moving the first direction.

In this way, the structure of the connector connecting the first detection camera and the base can be simplified, material costs can be reduced, and only the position of one camera is adjusted, making movement position control easy and operation simple.

In some embodiments, the paper stripping apparatus further includes an illumination lamp, and the illumination lamp is disposed on the base such that an illumination range of the illumination lamp includes the shooting range.

The illumination range of the illumination lamp includes the shooting range, so that the illumination lamp can provide sufficient light field for the first detection camera and the second detection camera, thereby improving detection accuracy.

In some embodiments, the paper stripping mechanism includes a clamp, the clamp includes multiple clamping assemblies sequentially arranged along the first direction, and the multiple clamping assemblies are configured to clamp the release paper of the multiple sheets in a one-to-one correspondence.

The multiple clamping assemblies are configured to clamp the release paper of the multiple sheets in a one-to-one correspondence, so that the paper stripping mechanism can simultaneously strip off the release paper of the multiple sheets, thereby improving paper stripping efficiency.

In some embodiments, the clamping assembly includes: a connector disposed on the base; a first clamping plate disposed on the connector; and a second clamping plate disposed on the connector; where the first clamping plate and the second clamping plate are capable of approaching or moving away from each other to clamp or release the release paper.

The clamping surfaces of the first clamping plate and the second clamping plate are relatively large. For some skewed and warped release paper, the first clamping plate and the second clamping plate with larger clamping surfaces can still clamp it. Therefore, the clamping assembly improves compatibility and reduces occurrences where release paper cannot be stripped off due to failure to clamp the release paper.

In some embodiments, the clamping assembly further includes a second driving member, the second driving member is disposed on the connector, and the second driving member is configured to drive the first clamping plate and/or the second clamping plate to approach or move away from each other.

The second driving member is configured to provide power for the movement of the first clamping plate and/or the second clamping plate.

In some embodiments, the multiple connectors are connected to each other to form a connection frame.

One connection frame simultaneously connects multiple first clamping plates and second clamping plates, resulting in a simple structure, high structural strength, and simple assembly operations.

In some embodiments, the first clamping plate is fixedly connected to the connector, and the second clamping plate is capable of approaching or moving away from the first clamping plate under the drive of the second driving member.

The first clamping plate is fixedly connected to the connector, simplifying the structure of the component connecting the first clamping plate and the connector, reducing material costs, and the position of only one clamping plate is adjusted, making movement position control easy and operation simple.

In some embodiments, the paper stripping mechanism further includes a movement mechanism, the movement mechanism is disposed on the base, the clamp is connected to the movement mechanism, and the movement mechanism is configured to drive the clamp to approach or move away from the sheet.

In this way, the movement mechanism is configured to drive the clamp to move, and the movement mechanism cooperates with the clamp to complete the paper stripping operation.

In some embodiments, the movement mechanism includes a multi-axis robot.

The multi-axis robot has characteristics such as reprogrammability, automatic control, and multiple degrees of freedom, with high precision in moving the clamp, improving the success rate of paper stripping.

In some embodiments, the sheet has a first adhesive surface and a second adhesive surface, the release paper covers the second adhesive surface, and the paper stripping mechanism is configured to perform the paper stripping action on the sheet adhered to a first adhesive pasting component through the first adhesive surface, to strip off the release paper covering the second adhesive surface.

The paper stripping apparatus is configured to strip off a second-surface release paper of the sheet adhered to the first adhesive pasting component.

In some embodiments, the paper stripping apparatus further includes a positioning mechanism configured to position the first adhesive pasting component; and the positioning mechanism includes at least two positioning structures sequentially spaced along the first direction, and each of the positioning structures is configured to limit the position of the first adhesive pasting component in a one-to-one correspondence.

The positioning mechanism is configured to position at least two first adhesive pasting components, thereby defining the positions of the sheets adhered to the at least two first adhesive pasting components, so that the at least two sheets are sequentially spaced along the first direction. In this way, at least two clamping assemblies of the clamp can clamp the release paper of the at least two sheets in a one-to-one correspondence, and during the paper stripping action, the positioned sheets will not move with the clamp, thereby smoothly stripping the release paper from the sheets.

In some embodiments, the positioning structure includes a bearing portion, a positioning block, and a pushing block, the bearing portion defines a bearing region, the positioning block and the pushing block are respectively disposed on two opposite sides of the bearing region along the first direction, and the pushing block is configured to approach or move away from the corresponding positioning block along the first direction to clamp or release the first adhesive pasting component located in the bearing region.

In this way, the positioning function of the positioning structure for the first adhesive pasting component is realized, and the structure of the positioning structure is simple, featuring a simple assembly process.

In some embodiments, the first adhesive pasting component includes a battery cell, and the sheet includes a thermal insulation pad.

The embodiments of this disclosure can be applied to the process of adhering thermal insulation pads to battery cells. Since the first detection camera and the second detection camera can simultaneously detect multiple thermal insulation pads, the efficiency of release paper detection can be improved. When replacing with larger-sized thermal insulation pads and performing the paper stripping operation on the larger-sized thermal insulation pads, the spacing between the first detection camera and the second detection camera can be increased, to enlarge the shooting fields of view of the first detection camera and the second detection camera, so that the at least two thermal insulation pads are within the shooting fields of view, thereby improving the compatibility of release paper detection without reducing the efficiency of release paper detection. Moreover, when replacing with smaller-sized thermal insulation pads and performing the paper stripping operation on the smaller-sized thermal insulation pads, the spacing between the first detection camera and the second detection camera can be reduced, to reduce the shooting fields of view of the first detection camera and the second detection camera, and enlarge the overlapping shooting field of view of the first detection camera and the second detection camera, so that a thermal insulation pad located in the overlapping shooting field of view is detected by both the first detection camera and the second detection camera, which is beneficial to improving detection accuracy.

A second aspect of this disclosure provides a paper stripping method using a paper stripping apparatus to perform a paper stripping operation on sheets, where the sheet has an adhesive surface covered by release paper, and the paper stripping apparatus includes a base, a paper stripping mechanism, a first detection camera, and a second detection camera. The paper stripping method includes: a paper stripping action, where the paper stripping mechanism strips off the release paper covering the adhesive surfaces of the multiple sheets sequentially arranged along a first direction; a detection preparation action, where the first detection camera and/or the second detection camera moves a set distance so that each of the sheets is within a shooting field of view of the first detection camera and/or the second detection camera; and a detection action, where the first detection camera and the second detection camera jointly shoot the multiple sheets that have completed the paper stripping action and detect, based on shot images, whether the release paper has been completely stripped or not.

In the paper stripping method, the first detection camera and the second detection camera simultaneously detect multiple sheets by approaching or moving away from each other, thereby improving the compatibility of release paper detection without reducing the efficiency of release paper detection. This is also beneficial to improving detection accuracy.

A third aspect of this disclosure provides an adhesive pasting method that uses an adhesive pasting device to adhere sheets to an adhesive pasting component, the sheet has an adhesive surface covered by release paper, the adhesive pasting device includes a paper stripping apparatus and an adhesion apparatus, and the paper stripping apparatus includes a base, a paper stripping mechanism, a first detection camera, and a second detection camera. The adhesive pasting method includes: a paper stripping action, where the paper stripping mechanism strips off the release paper covering the adhesive surface of multiple sheets sequentially arranged along a first direction; a detection preparation action, where the first detection camera and/or the second detection camera moves a set distance so that each of the sheets is within a shooting field of view of the first detection camera and/or the second detection camera; a detection action, where the first detection camera and the second detection camera jointly shoot the multiple sheets that have completed the paper stripping action and detect, based on shot images, whether the release paper has been completely stripped or not; and an adhesion action, where the adhesion apparatus adheres a sheet that has been detected to have the release paper completely stripped off to the adhesive pasting component through the adhesive surface.

In the adhesive pasting method, the first detection camera and the second detection camera simultaneously detect multiple sheets by approaching or moving away from each other, thereby improving the compatibility of release paper detection without reducing the efficiency of release paper detection. This is also beneficial to improving detection accuracy.

A fourth aspect of this disclosure provides an adhesive pasting device, including: a first-surface paper stripping apparatus configured to strip off release paper on one surface of a sheet to expose a first adhesive surface; a first-surface adhesion apparatus configured to adhere the sheet to a first adhesive pasting component through the first adhesive surface; the foregoing paper stripping apparatus as a second-surface paper stripping apparatus, where the paper stripping apparatus is configured to perform the paper stripping operation on the sheet to strip off release paper on the other surface to expose a second adhesive surface; and a second-surface adhesion apparatus configured to adhere the sheet to a second adhesive pasting component through the second adhesive surface.

The adhesive pasting device provided by the embodiments of this disclosure is configured to adhere the sheet between the first adhesive pasting component and the second adhesive pasting component. Since the adhesive pasting device includes the above paper stripping apparatus, the adhesive pasting device includes all the beneficial effects of the above paper stripping apparatus. Therefore, the adhesive pasting device improves the compatibility of release paper detection without reducing the efficiency of release paper detection, and improves detection accuracy.

A fifth aspect of this disclosure provides an adhesive pasting method that uses an adhesive pasting device to adhere a sheet between a first adhesive pasting component and a second adhesive pasting component, the sheet has a first adhesive surface and a second adhesive surface respectively covered by release paper, the adhesive pasting device includes a first-surface paper stripping apparatus, a first-surface adhesion apparatus, a second-surface paper stripping apparatus, and a second-surface adhesion apparatus, and the second-surface paper stripping apparatus includes a base, a paper stripping mechanism, a first detection camera, and a second detection camera. The adhesive pasting method includes: a first-surface paper stripping operation, where the first-surface paper stripping apparatus strips off release paper on one surface of the sheet to expose the first adhesive surface; a first-surface adhesion operation, where the first-surface adhesion apparatus adheres the sheet to the first adhesive pasting component through the first adhesive surface; a second-surface paper stripping operation, where the second-surface paper stripping operation includes: a paper stripping action, where the paper stripping mechanism strips off the release paper covering the second adhesive surface of the multiple sheets sequentially arranged along a first direction, a detection preparation action, where the first detection camera and/or the second detection camera moves a set distance so that each of the sheets is within a shooting field of view of the first detection camera and/or the second detection camera, and a detection action, where the first detection camera and the second detection camera jointly shoot the multiple sheets that have completed the paper stripping action and detect, based on shot images, whether the release paper has been completely stripped or not; and a second-surface adhesion operation, where the second-surface adhesion apparatus adheres a sheet that has been detected to have the release paper on the second adhesive surface completely stripped off to the second adhesive pasting component through the second adhesive surface.

The adhesive pasting method provided by the embodiments of this disclosure is configured to adhere the sheet between the first adhesive pasting component and the second adhesive pasting component. In the adhesive pasting method, the first detection camera and the second detection camera simultaneously detect multiple sheets by approaching or moving away from each other, thereby improving the compatibility of release paper detection without reducing the efficiency of release paper detection. In addition, this is also beneficial to improving detection accuracy.

### Effects of the invention

Through this disclosure, the paper stripping apparatus, the paper stripping method, the adhesive pasting device, and the adhesive pasting method are provided, which improve the compatibility of release paper detection without reducing the efficiency of release paper detection.

### DESCRIPTION OF DRAWINGS

Various other advantages and benefits will become apparent to those of ordinary skill in the art by reading the detailed description of the preferred embodiments below. The drawings are only for the purpose of illustrating the preferred embodiments and are not to be considered as limiting this disclosure. Moreover, throughout all the drawings, the same reference numerals denote the same components.

In the drawings:
FIG. 1 is a schematic perspective structural view of a paper stripping apparatus provided by some embodiments of this disclosure;
FIG. 2 is a front view of a paper stripping apparatus provided by some embodiments of this disclosure;
FIG. 3 is a schematic diagram of position distribution of multiple sheets provided by some embodiments of this disclosure;
FIG. 4 is a front view of a clamp provided by some embodiments of this disclosure;
FIG. 5 is a side view of a clamp provided by some embodiments of this disclosure;
FIG. 6 is a schematic perspective structural view of a positioning mechanism provided by some embodiments of this disclosure;
FIG. 7 is a schematic flowchart of a paper stripping method provided by some embodiments of this disclosure;
FIG. 8 is a structural schematic diagram of an adhesive pasting device provided by some embodiments of this disclosure;
FIG. 9 is a schematic flowchart of an adhesive pasting method provided by some embodiments of this disclosure;
FIG. 10 is a structural schematic diagram of an adhesive pasting device provided by some other embodiments of this disclosure; and
FIG. 11 is a schematic flowchart of an adhesive pasting method provided by some other embodiments of this disclosure.

Description of reference signs
100 sheet; 100a first sheet; 100b second sheet; 200 first adhesive pasting component;
1 base; 2 paper stripping mechanism; 21 clamp; 211 clamping assembly; 2111 first clamping plate; 2112 second clamping plate; 2113 second driving member; 212 connection frame; 2131 first slide rail; 2132 first slider; 22 movement mechanism; 3 first detection camera; 4 second detection camera; 5 camera mounting structure; 7 first driving member; 8 illumination lamp; 9 positioning mechanism; 91 bearing portion; 92 positioning block; 93 pushing block;
1000 adhesion apparatus; 2000 first-surface paper stripping apparatus; 3000 first-surface adhesion apparatus; 4000 second-surface paper stripping apparatus; and 5000 second-surface adhesion apparatus.

### DETAILED DESCRIPTION OF EMBODIMENTS

Embodiments of the technical solutions of this disclosure will be described in detail below in conjunction with the drawings. The following embodiments are only for more clearly illustrating the technical solutions of this disclosure, and therefore are only examples and cannot be used to limit the protection scope of this disclosure.

Unless otherwise defined, all technical and scientific terms used herein have the same meaning as commonly understood by those skilled in the technical field to which this disclosure belongs. The terms used herein are only for the purpose of describing specific embodiments and are not intended to limit this disclosure. The terms "including" and "having" and any variations thereof in the specification and claims of this disclosure and in the above description of the drawings are intended to cover non-exclusive inclusion.

In the description of the embodiments of this disclosure, the technical terms "first", "second", "third", and the like are only used to distinguish different objects and cannot be understood as indicating or implying relative importance or implicitly indicating the number, specific order, or primary-secondary relationship of the indicated technical features. In the description of the embodiments of this disclosure, "multiple" means two or more, unless otherwise explicitly and specifically defined.

Reference herein to "embodiment" means that a particular feature, structure, or characteristic described in connection to the embodiment may be included in at least one embodiment of this disclosure. The appearance of the phrase in various places in the specification does not necessarily refer to the same embodiment, nor is it an independent or alternative embodiment that is mutually exclusive with other embodiments. It is explicitly and implicitly understood by those skilled in the art that the embodiments described herein can be combined with other embodiments.

In the description of the embodiments of this disclosure, the term "and/or" is merely a description of the association relationship of associated objects, indicating that three relationships can exist, for example, A and/or B, which can indicate: A alone exists, A and B exist simultaneously, and B alone exists. In addition, the character "/" herein generally indicates that the associated objects before and after are in an "or" relationship.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicating orientation or positional relationships are based on the orientation or positional relationships shown in the drawings, only for the convenience of describing the embodiments of this disclosure and simplifying the description, and do not indicate or imply that the referred device or element must have a specific orientation, be constructed and operated in a specific orientation, and therefore cannot be understood as limiting the embodiments of this disclosure.

In the description of the embodiments of this disclosure, unless otherwise explicitly specified and defined, the technical terms "mount", "interconnect", "connect", "fix", and the like should be understood in a broad sense. For example, it can be a fixed connection, a detachable connection, or an integral connection. It can be a mechanical connection or an electrical connection. It can be directly connected or indirectly connected through an intermediate medium, or it can be the internal communication of two elements or the interaction relationship of two elements. For those of ordinary skill in the art, the specific meanings of the above terms in the embodiments of this disclosure can be understood according to specific situations.

In the description of the embodiments of this disclosure, unless otherwise explicitly specified and defined, the technical term "contact" should be understood in a broad sense, which can be direct contact, contact with an intermediate medium layer in between, contact between two objects with basically no mutual force, or contact between two objects with mutual force.

Below, this disclosure is described in detail.

At present, new energy batteries are increasingly widely used in daily life and industry. New energy batteries are not only applied to energy storage power systems such as hydropower, thermal power, wind power, and solar power plants, but also widely applied to electric transportation tools such as electric bicycles, electric motorcycles, and electric vehicles, as well as multiple fields such as aerospace. With the continuous expansion of the application fields of power batteries, their market demand is also continuously increasing.

A battery module is composed of multiple battery cells. In the production and manufacturing process of the battery module, especially during the grouping process of batteries, it is usually necessary to adhere thermal insulation pads or double-sided adhesives to the battery cells. Improving the adhesion efficiency is an important aspect of improving the grouping efficiency of the battery module. The adhesion process of the thermal insulation pads or double-sided adhesives requires first stripping off release paper, then detecting whether the release paper has been completely stripped or not, and thereafter adhering the fully exposed adhesive surface to the battery cell. Therefore, improving the efficiency of release paper detection is one of the important measures to improve the efficiency of the adhesion process.

In addition, since battery modules usually include multiple models, the thermal insulation pads or double-sided adhesives requiring release paper to be stripped off have multiple specifications. Therefore, how to improve the compatibility of release paper detection without reducing the efficiency of release paper detection is one of the research topics in the industry.

The inventor of this disclosure has noted that currently, to improve grouping efficiency, the traditional way is to simultaneously perform grouping operations for at least two battery modules, that is, during the grouping process, using a detection camera to simultaneously detect at least two thermal insulation pads or double-sided adhesives. However, for cases where the specifications of the thermal insulation pads or double-sided adhesives change, for example, when the thermal insulation pads or double-sided adhesives extend out of the field of view of the detection camera, the detection camera cannot simultaneously detect all thermal insulation pads or double-sided adhesives, thereby affecting the efficiency of release paper detection.

The inventor of this disclosure has found through research that using two detection cameras with adjustable spacing to replace the traditional detection camera with fixed and smaller shooting field of view can achieve adjustable shooting field of view. For cases where the specifications of thermal insulation pads or double-sided adhesives change, the spacing of two detection cameras can be adaptively adjusted to adjust the shooting field of view, so that the shooting field of view includes at least two thermal insulation pads or double-sided adhesives, thereby achieving simultaneous detection of at least two thermal insulation pads or double-sided adhesives. Thus, this can improve the compatibility of release paper detection without reducing the efficiency of release paper detection.

Based on such a design concept, the inventor of this disclosure has designed a paper stripping apparatus configured to perform a paper stripping operation on at least two sheets, where the sheet has an adhesive surface covered by release paper. The paper stripping operation includes a paper stripping action of stripping the release paper from the adhesive surface and a detection action of detecting whether the release paper after the paper stripping action has been completely stripped or not. The paper stripping apparatus includes a base, a paper stripping mechanism, a first detection camera, and a second detection camera. The paper stripping mechanism is disposed on the base, and the paper stripping mechanism is configured to perform the paper stripping action on the at least two sheets sequentially arranged along a first direction. The first detection camera is disposed on the base. The second detection camera is disposed on the base and located on a side of the first detection camera along the first direction. The first detection camera and the second detection camera are configured to be able to approach or move away from each other so that each of the sheets is within shooting fields of view of the first detection camera and the second detection camera. The first detection camera and the second detection camera are configured to jointly perform the detection action on the multiple sheets.

When the paper stripping apparatus is used for paper stripping operations, the paper stripping mechanism performs the paper stripping action on the at least two sheets sequentially arranged along the first direction. The first detection camera and the second detection camera approach or move away from each other so that each of the sheets is within the shooting fields of view of the first detection camera and the second detection camera, and the first detection camera and the second detection camera jointly perform the detection action on the multiple sheets.

When replacing with larger-sized thermal insulation pads or double-sided adhesives and performing the paper stripping operation on the larger-sized thermal insulation pads or double-sided adhesives, the spacing of the two detection cameras can be increased, to enlarge the shooting fields of view of the two detection cameras, so that the at least two thermal insulation pads or double-sided adhesives are within the shooting fields of view, thereby improving the compatibility of release paper detection without reducing the efficiency of release paper detection. Moreover, when replacing with smaller-sized thermal insulation pads or double-sided adhesives and performing the paper stripping operation on the smaller-sized thermal insulation pads or double-sided adhesives, the spacing of the two detection cameras can be reduced, to reduce the shooting fields of view of the two detection cameras, and enlarge the overlapping shooting field of view of the two detection cameras, so that a thermal insulation pad or double-sided adhesive located in the overlapping shooting field of view is detected by both the two detection cameras, which is beneficial to improving detection accuracy.

The paper stripping apparatus of the embodiments of this disclosure can be used in the grouping process of battery modules, for example, for operations of stripping off release paper from thermal insulation pads or double-sided adhesives that need to be adhered to battery cells. Certainly, those skilled in the art should understand that the paper stripping apparatus provided by the embodiments of this disclosure is not only used for paper stripping operations on various sheets in the grouping process of battery modules, but can also be used for paper stripping operations on other sheets that require stripping off release paper.

A battery cell refers to a basic unit capable of realizing mutual conversion between chemical energy and electrical energy, and can be used to make a battery module or a battery pack, thereby supplying power to an electric apparatus.

The battery cell can be a secondary battery, and the secondary battery refers to a battery cell that can continue to be used by activating the active material through charging after the battery cell is discharged.

The battery cell can be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, and the like, and the embodiments of this disclosure are not limited thereto.

In the embodiments of this disclosure, a battery can be a single physical module including one or more battery cells to provide higher voltage and capacity. When there are multiple battery cells, the multiple battery cells are connected in series, parallel, or series-parallel through busbar components.

In some embodiments, the battery can be a battery module, and when there are multiple battery cells, the multiple battery cells are arranged and fixed to form a battery module.

In some embodiments, the battery can be a battery pack, the battery pack includes a box and battery cells, and the battery cells or battery modules are accommodated in the box.

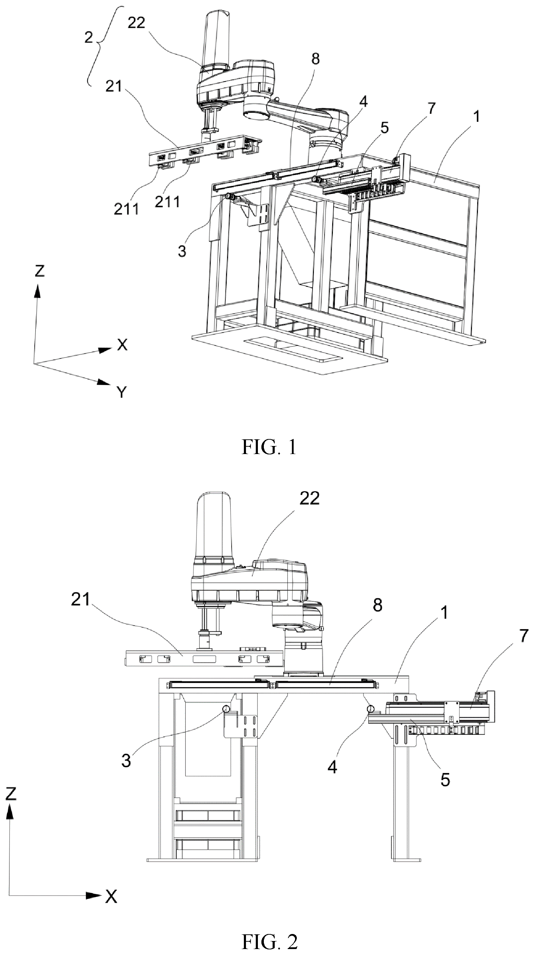

Below, some embodiments of this disclosure are described in detail with reference to FIGs. 1 to 6.

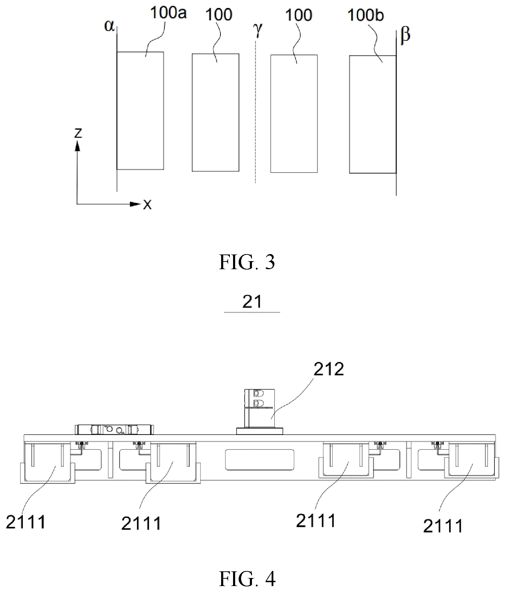

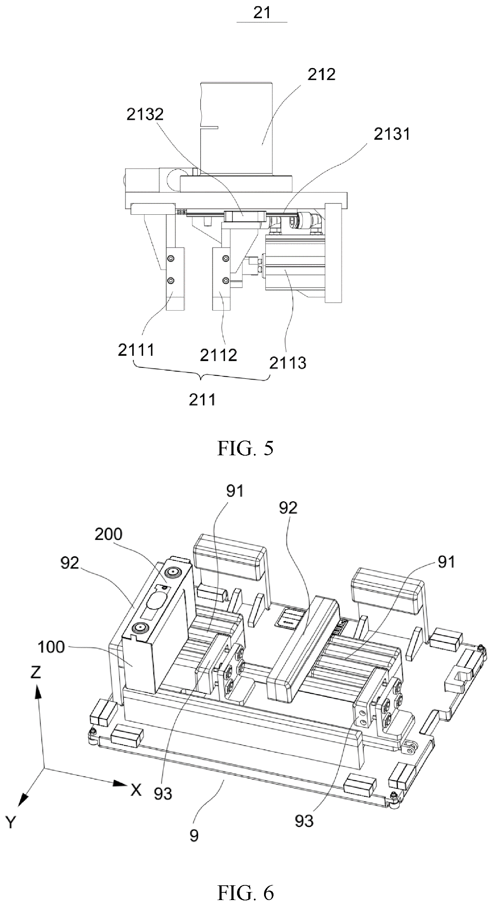

FIG. 1 is a schematic perspective structural view of a paper stripping apparatus provided by some embodiments of this disclosure. FIG. 2 is a front view of a paper stripping apparatus provided by some embodiments of this disclosure. FIG. 3 is a schematic diagram of position distribution of multiple sheets provided by some embodiments of this disclosure. FIG. 4 is a front view of a clamp provided by some embodiments of this disclosure. FIG. 5 is a side view of a clamp provided by some embodiments of this disclosure. FIG. 6 is a schematic perspective structural view of a positioning mechanism provided by some embodiments of this disclosure.

In some embodiments of this disclosure, for convenience of explanation, a first direction, a second direction, and a third direction are set, and the first direction, the second direction, and the third direction are directions intersecting each other, where intersecting each other includes perpendicularly intersecting each other. For ease of understanding the embodiments of this disclosure, in the embodiments shown in FIGs. 1 to 11, the first direction, the second direction, and the third direction are taken as examples of directions perpendicularly intersecting each other for explanation, but those skilled in the art should understand that the embodiments of this disclosure are not limited to the case where the three directions perpendicularly intersect each other. For convenience of explanation, as shown by the arrows in FIGs. 1 to 3, 6, and 8, the direction indicated by arrow X is the first direction, the direction indicated by arrow Y is the second direction, and the direction indicated by arrow Z is the third direction. Sometimes, the direction pointed by arrow Z along the third direction is also referred to as "upper", and the opposite direction is referred to as "lower".

As shown in FIGs. 1 and 2, a first aspect of this disclosure provides a paper stripping apparatus configured to perform a paper stripping operation on at least two sheets 100, and the sheet 100 has an adhesive surface covered by release paper. The paper stripping operation includes a paper stripping action of stripping the release paper from the adhesive surface and a detection action of detecting whether the release paper after the paper stripping action has been completely stripped or not. The paper stripping apparatus includes a base 1, a paper stripping mechanism 2, a first detection camera 3, and a second detection camera 4. The paper stripping mechanism 2 is disposed on the base 1. The paper stripping mechanism 2 is configured to perform the paper stripping action on the at least two sheets 100 sequentially arranged along a first direction. The first detection camera 3 is disposed on the base 1. The second detection camera 4 is disposed on the base 1 and located on a side of the first detection camera 3 along the first direction. The first detection camera 3 and the second detection camera 4 are configured to be able to approach or move away from each other so that each of the sheets 100 is within shooting fields of view of the first detection camera 3 and the second detection camera 4. The first detection camera 3 and the second detection camera 4 are configured to jointly perform the detection action on the multiple sheets 100.

The sheet 100 is a sheet-like object having an adhesive surface on at least one side surface, and the adhesive surface is covered with release paper. Illustratively, the sheet 100 may have an adhesive surface on only one side, and the adhesive surface is covered with release paper. The sheet 100 may alternatively have adhesive surfaces on both sides. In the case where both sides have adhesive surfaces, one adhesive surface of the sheet 100 has its release paper stripped off and is adhered to an adhesive pasting component, and the other adhesive surface is covered with release paper. The paper stripping apparatus provided by the embodiments of this disclosure is configured to strip off the release paper. The sheet 100 may alternatively have release paper covering both adhesive surfaces, and the paper stripping apparatus provided by the embodiments of this disclosure is configured to strip off only one piece of the release paper or sequentially strip off the two pieces of the release paper. The sheet 100 may be an adhesive material (for example, double-sided adhesive) used only for bonding two components, or may be an adhesive material having bonding function and other effects, such as but not limited to a thermal insulation pad with thermal insulation effect, a thermal conductive pad with thermal conduction function, an insulation pad with insulation effect, and the like.

The base 1 is a component for mounting the paper stripping mechanism 2, the first detection camera 3, and the second detection camera 4, making the paper stripping apparatus an integral structure. The base 1 may be a block or a frame. Illustratively, the frame as the base 1 includes a top plate and several support rods, the support rods extend along the third direction, the top plate is connected to the top ends of the several support rods, the paper stripping mechanism 2 is connected to the top plate, and the first detection camera 3 and the second detection camera 4 are connected to the side portions of the support rods.

The first detection camera 3 and the second detection camera 4 are both cameras for shooting and detecting whether the release paper has been completely stripped or not based on shot images. For the specific structure and working principle, reference can be made to the prior art, which will not be repeated herein.

"The first detection camera 3 and the second detection camera 4 are configured to be able to approach or move away from each other" means that the spacing between the first detection camera 3 and the second detection camera 4 is adjustable. It can be that the first detection camera 3 does not move and the second detection camera 4 approaches or moves away from the first detection camera 3. Alternatively, it can be that the second detection camera 4 does not move and the first detection camera 3 approaches or moves away from the second detection camera 4. Alternatively, it can be that both the first detection camera 3 and the second detection camera 4 move, with the first detection camera 3 and the second detection camera 4 moving toward or away from each other.

When the paper stripping apparatus is used for paper stripping operations, the paper stripping mechanism 2 performs the paper stripping action on the at least two sheets 100 sequentially arranged along the first direction. The first detection camera 3 and the second detection camera 4 approach or move away from each other so that each of the sheets 100 is within the shooting fields of view of the first detection camera 3 and the second detection camera 4, and the first detection camera 3 and the second detection camera 4 jointly perform the detection action on the multiple sheets 100.

The first detection camera 3 and the second detection camera 4 can simultaneously detect multiple sheets 100, which can improve the efficiency of release paper detection. When replacing with larger-sized sheets 100 and performing the paper stripping operation on the larger-sized sheets 100, the spacing between the first detection camera 3 and the second detection camera 4 can be increased, to enlarge the shooting fields of view of the first detection camera 3 and the second detection camera 4, so that at least two sheets 100 are within the shooting fields of view, thereby improving the compatibility of release paper detection without reducing the efficiency of release paper detection. Moreover, when replacing with smaller-sized sheets 100 and performing the paper stripping operation on the smaller-sized sheets 100, the spacing between the first detection camera 3 and the second detection camera 4 can be reduced, to reduce the shooting fields of view of the first detection camera 3 and the second detection camera 4, and enlarge the overlapping shooting field of view of the first detection camera 3 and the second detection camera 4, so that a sheet 100 located in the overlapping shooting field of view is detected by both the first detection camera 3 and the second detection camera 4, which is beneficial to improving detection accuracy.

In some embodiments of this disclosure, the shooting field of view of the first detection camera 3 is a first shooting field of view, the shooting field of view of the second detection camera 4 is a second shooting field of view, the first shooting field of view and the second shooting field of view jointly form a shooting range and the first shooting field of view and the second shooting field of view have an overlapping portion, and each of the sheets 100 is within the shooting range.

It should be noted that the first shooting field of view refers to a field of view that the first detection camera 3 can shoot when the first detection camera 3 and the second detection camera 4 approach or move away from each other to a position suitable for shooting all sheets 100, and the second shooting field of view refers to a field of view that the second detection camera 4 can shoot when the first detection camera 3 and the second detection camera 4 approach or move away from each other to a position suitable for shooting all sheets 100.

The first shooting field of view of the first detection camera 3 and the second shooting field of view of the second detection camera 4 have an overlapping portion, so the shooting range formed thereby is continuous, reducing the possibility of affecting detection accuracy due to a gap between the first shooting field of view and the second shooting field of view. Moreover, at least a portion of the sheets 100 can be located in the overlapping portion of the first shooting field of view and the second shooting field of view, so that the sheet 100 in the overlapping portion is detected by both the first detection camera 3 and the second detection camera 4, which is beneficial to improving detection accuracy.

In some embodiments of this disclosure, the first detection camera 3 and the second detection camera 4 approach or move away from each other so that a midpoint between the first detection camera 3 and the second detection camera 4 is located in a median plane γ of a region occupied by all the sheets 100.

For ease of understanding, the median plane γ of the region occupied by all sheets 100 is explained here. As shown in FIG. 3, along the first direction, the sheet 100 at the head is a first sheet 100a, the sheet 100 at the tail is a second sheet 100b, an end surface of an end of the first sheet 100a away from the second sheet 100b is a first reference surface α, an end surface of an end of the second sheet 100b away from the first sheet 100a is a second reference surface β, and a plane at an intermediate position between the first reference surface α and the second reference surface β is the median plane γ of the region occupied by all sheets 100.

In this way, the first detection camera 3 and the second detection camera 4 are capable of approaching or moving away from each other to achieve a state of being centrally aligned with all the sheets 100, so that the first detection camera 3 and the second detection camera 4 can shoot all the sheets 100 while maximizing the overlapping portion of the first shooting field of view and the second shooting field of view, thereby further improving detection accuracy.

In some embodiments of this disclosure, the paper stripping apparatus further includes a control module, the control module determines a position of the median plane γ based on a position and size of the sheets 100 in the first direction, calculates a distance that the first detection camera 3 and/or the second detection camera 4 needs to move based on positions of the first detection camera 3 and the second detection camera 4, and controls the first detection camera 3 and/or the second detection camera 4 to move.

The provision of the control module realizes automation of the movement of the first detection camera 3 and/or the second detection camera 4, thereby improving the accuracy and efficiency of position adjustment of the first detection camera 3 and/or the second detection camera 4.

In some embodiments of this disclosure, as shown in FIG. 3, along the first direction, the sheet 100 at the head is a first sheet 100a, the sheet 100 at the tail is a second sheet 100b, an end surface of the first sheet 100a away from the second sheet 100b is a first reference surface α, an end surface of the second sheet 100b away from the first sheet 100a is a second reference surface β, and a plane at an intermediate position between the first reference surface α and the second reference surface β is the median plane γ; and the control module calculates a position of the median plane γ based on positions of the first reference surface α and the second reference surface β.

It can be understood that the position of the median plane γ is not limited to being determined by the first reference surface α and the second reference surface β, and can alternatively be determined by any other two surfaces symmetrical with respect to the median plane γ, illustratively, by the end surface of the first sheet 100a facing towards the second sheet 100b and the end surface of the second sheet 100b facing towards the first sheet 100a.

The spacing between the first reference surface α and the second reference surface β is the total length of the region where all sheets 100 are located in the first direction. In this way, the position of the midpoint of the total length can be accurately calculated, thereby accurately determining the median plane γ of the region where all sheets 100 are located.

In some embodiments of this disclosure, the first detection camera 3 is fixedly disposed on the base 1, and the second detection camera 4 is disposed on the base 1 and capable of moving the first direction.

In this way, the structure of the connector connecting the first detection camera 3 and the base 1 can be simplified, material costs can be reduced, and only the position of one camera is adjusted, making movement position control easy and operation simple.

In some embodiments of this disclosure, the paper stripping apparatus further includes a camera mounting structure 5 and a first driving member 7. The first driving member 7 is disposed on the base 1, the second detection camera 4 is connected to the output end of the first driving member 7 through the camera mounting structure 5, and the output end of the first driving member 7 is configured to drive the second detection camera 4 to reciprocate along the first direction.

The provision of the camera mounting structure 5 and the first driving member 7 realizes the movable mounting of the second detection camera 4 on the base 1.

In some embodiments of this disclosure, the first driving member 7 includes a servo motor.

The servo motor facilitates changing the driving stroke, thereby facilitating adjustment of the movement stroke of the second detection camera 4.

In some embodiments of this disclosure, the paper stripping apparatus further includes an illumination lamp 8, and the illumination lamp 8 is disposed on the base 1 such that an illumination range of the illumination lamp 8 includes the shooting range.

The illumination range of the illumination lamp 8 includes the shooting range, so that the illumination lamp 8 can provide sufficient light field for the first detection camera 3 and the second detection camera 4, thereby improving detection accuracy.

In some embodiments of this disclosure, as shown in FIGs. 1, 4, and 5, the paper stripping mechanism 2 includes a clamp 21, the clamp 21 includes multiple clamping assemblies 211 sequentially arranged along the first direction, and the multiple clamping assemblies 211 are configured to clamp the release paper of the multiple sheets 100 in a one-to-one correspondence.

The multiple clamping assemblies 211 are configured to clamp the release paper of the multiple sheets 100 in a one-to-one correspondence, so that the paper stripping mechanism 2 can simultaneously strip off the release paper of the multiple sheets 100, thereby improving paper stripping efficiency.

In some embodiments of this disclosure, the clamping assembly 211 includes a connector, a first clamping plate 2111, and a second clamping plate 2112. The connector is disposed on the base 1; the first clamping plate 2111 is disposed on the connector; and the second clamping plate 2112 is disposed on the connector; where the first clamping plate 2111 and the second clamping plate 2112 are capable of approaching or moving away from each other to clamp or release the release paper.

"The first clamping plate 2111 and the second clamping plate 2112 is capable of approaching or moving away from each other" means that the spacing between the first clamping plate 2111 and the second clamping plate 2112 can be reduced or increased. It can be that the first clamping plate 2111 does not move and the second clamping plate 2112 moves toward the first clamping plate 2111 or away from the first clamping plate 2111. Alternatively, it can be that the second clamping plate 2112 does not move and the first clamping plate 2111 moves toward the second clamping plate 2112 or away from the second clamping plate 2112. Alternatively, it can be that both the first clamping plate 2111 and the second clamping plate 2112 move, with the first clamping plate 2111 and the second clamping plate 2112 moving toward or away from each other.

It can be understood that both the first clamping plate 2111 and the second clamping plate 2112 are plate-like structures, and the large surfaces of the first clamping plate 2111 and the second clamping plate 2112 serve as clamping surfaces to clamp the release paper.

The clamping surfaces of the first clamping plate 2111 and the second clamping plate 2112 are relatively large. For some skewed and warped release paper, the first clamping plate 2111 and the second clamping plate 2112 with larger clamping surfaces can still clamp it. Therefore, the clamping assembly 211 improves compatibility and reduces occurrences where release paper cannot be stripped off due to failure to clamp the release paper.

In some embodiments of this disclosure, anti-slip tooth structures are provided on the clamping surfaces of the first clamping plate 2111 and the second clamping plate 2112.

The anti-slip tooth structures are configured to prevent the release paper clamped between the first clamping plate 2111 and the second clamping plate 2112 from slipping out, thereby improving the success rate of paper stripping.

In some embodiments of this disclosure, the clamping assembly 211 further includes a second driving member 2113, the second driving member 2113 is disposed on the connector, and the second driving member 2113 is configured to drive the first clamping plate 2111 and/or the second clamping plate 2112 to approach or move away from each other.

The second driving member 2113 is configured to provide power for the movement of the first clamping plate 2111 and/or the second clamping plate 2112.

In some embodiments of this disclosure, the first clamping plate 2111 is fixedly connected to the connector, and the second clamping plate 2112 is capable of approaching or moving away from the first clamping plate 2111 under the drive of the second driving member 2113.

The first clamping plate 2111 is fixedly connected to the connector, simplifying the structure of the component connecting the first clamping plate 2111 and the connector, reducing material costs, and the position of only one clamping plate is adjusted, making movement position control easy and operation simple.

In some embodiments of this disclosure, the second driving member 2113 includes a cylinder or a linear motor.

In some embodiments of this disclosure, the multiple connectors are connected to each other to form a connection frame 212.

One connection frame 212 simultaneously connects multiple first clamping plates 2111 and second clamping plates 2112, resulting in a simple structure, high structural strength, and simple assembly operations.

In some embodiments of this disclosure, one of the connection frame 212 and the second clamping plate 2112 is provided with a first slide rail 2131 extending along the second direction, and the other is provided with a first slider 2132. The first slider 2132 is slidably connected to the first slide rail 2131.

The provision of the first slide rail 2131 and the first slider 2132 improves the smoothness of the movement of the second clamping plate 2112.

In some embodiments of this disclosure, the first slide rail 2131 is disposed on the connection frame 212, and the first slider 2132 is connected to the second clamping plate 2112.

This arrangement improves the stability of mounting the first slide rail 2131, thereby improving the stability of the movement of the second clamping plate 2112.

In some embodiments of this disclosure, the paper stripping mechanism 2 further includes a movement mechanism 22, the movement mechanism 22 is disposed on the base 1, the clamp 21 is connected to the movement mechanism 22, and the movement mechanism 22 is configured to drive the clamp 21 to approach or move away from the sheet 100.

When paper stripping is required, the movement mechanism 22 drives the clamp 21 to approach the sheets 100, and when the clamp 21 approaches a set position, the release paper is clamped, and then the movement mechanism 22 drives the clamp 21 to move in a set direction, thereby driving the release paper to be stripped off from the adhesive surface of the sheets 100.

In this way, the movement mechanism 22 is configured to drive the clamp 21 to move, and the movement mechanism 22 cooperates with the clamp 21 to complete the paper stripping operation.

In some embodiments of this disclosure, the movement mechanism 22 includes a multi-axis robot.

Multi-axis robots are multi-purpose manipulators capable of creating a spatial rectangular relationship in a reprogrammable manner with automatic control, multiple degrees of freedom, and movement degrees of freedom. Its working behavior mainly involves completing linear movements along the X, Y, and Z axes. Multi-axis robots include three-axis robots, four-axis robots, five-axis robots, six-axis robots, and the like.

The multi-axis robot has characteristics such as reprogrammability, automatic control, and multiple degrees of freedom, with high precision in moving the clamp 21, improving the success rate of paper stripping.

In some embodiments of this disclosure, the sheet 100 has a first adhesive surface and a second adhesive surface, both the first adhesive surface and the second adhesive surface are covered by release paper, and the paper stripping mechanism 2 is configured to strip off the release paper covering the first adhesive surface or the second adhesive surface.

The paper stripping apparatus is configured to strip off a first-surface release paper of the sheet 100.

It should be noted that both the first adhesive surface and the second adhesive surface of the sheet 100 are covered by release paper, that is, the sheet 100 is not adhered to other components. During the paper stripping operation, the sheet 100 needs to be positioned separately, thereby completing the paper stripping operation when the paper stripping mechanism 2 acts.

In some embodiments of this disclosure, the sheet 100 has a first adhesive surface and a second adhesive surface, the release paper covers the second adhesive surface, and the paper stripping mechanism 2 is configured to perform the paper stripping action on the sheet 100 adhered to a first adhesive pasting component 200 through the first adhesive surface, to strip off the release paper covering the second adhesive surface.

The paper stripping apparatus is configured to strip off a second-surface release paper of the sheet 100 adhered to the first adhesive pasting component 200.

It should be noted that the sheet 100 is adhered to the first adhesive pasting component 200 through the first adhesive surface, that is, the sheet 100 is attached to the first adhesive pasting component 200. During the paper stripping operation, the position of the sheet 100 can be indirectly defined by positioning the first adhesive pasting component 200, thereby completing the paper stripping operation when the paper stripping mechanism 2 acts.

In some embodiments of this disclosure, as shown in FIG. 6, the paper stripping apparatus further includes a positioning mechanism 9 configured to position the first adhesive pasting component 200; and the positioning mechanism 9 includes at least two positioning structures sequentially spaced along the first direction, and each positioning structure is configured to limit the position of the first adhesive pasting component 200 in a one-to-one correspondence.

The positioning mechanism 9 is configured to position at least two first adhesive pasting components 200, thereby defining the positions of the sheets 100 adhered to the at least two first adhesive pasting components 200, so that the at least two sheets 100 are sequentially spaced along the first direction. In this way, at least two clamping assemblies 211 of the clamp 21 can clamp the release paper of the at least two sheets 100 in a one-to-one correspondence, and during the paper stripping action, the positioned sheets 100 will not move with the clamp 21, thereby smoothly stripping the release paper from the sheets 100.

In some embodiments of this disclosure, the positioning structure includes a bearing portion 91, a positioning block 92, and a pushing block 93, the bearing portion 91 defines a bearing region, the positioning block 92 and the pushing block 93 are respectively disposed on two opposite sides of the bearing region along the first direction, and the pushing block 93 is configured to approach or move away from the corresponding positioning block 92 along the first direction to clamp or release the first adhesive pasting component 200 located in the bearing region.

In this way, the positioning function of the positioning structure for the first adhesive pasting component 200 is realized, and the structure of the positioning structure is simple, featuring a simple assembly process.

In some embodiments of this disclosure, the pushing blocks 93 of each positioning structure are all connected to the same connection plate, and the connection plate reciprocates along the first direction under the drive of a third driving member.

In this way, the third driving member can drive at least two pushing blocks 93 to reciprocate simultaneously in the first direction, simplifying the structure of the positioning mechanism 9, saving costs, and enabling the at least two pushing blocks 93 to move synchronously. This optimizes the positioning effect for at least two first adhesive pasting components 200.

In some embodiments of this disclosure, the positioning mechanism 9 is disposed on a side of the first detection camera 3 and the second detection camera 4 along the second direction. The second direction intersects the first direction, and intersecting includes perpendicularly intersecting. The first adhesive surface of the sheet 100 is adhered to the side of the first adhesive pasting component 200 where the first detection camera 3 and the second detection camera 4 are located along the second direction.

In this way, the first detection camera 3 and the second detection camera 4 are disposed facing towards the second adhesive surface of the sheet 100 covered with release paper, so that after the paper stripping action is completed, the first detection camera 3 and the second detection camera 4 can shoot the second adhesive surface of the sheet 100 located on the positioning mechanism 9, thereby detecting residual release paper on the second adhesive surface.

In some embodiments of this disclosure, the positioning mechanism 9 serves as a tray transferred to a production line. A previous process is a process of adhering the sheet 100 to the first adhesive pasting component 200 positioned on the positioning mechanism 9 through the first adhesive surface. After the adhesion process is completed, the positioning mechanism 9 is transferred to a side spaced a set distance from the first detection camera 3 and the second detection camera 4, to perform the operation of stripping off the release paper covering the second adhesive surface.

In some embodiments of this disclosure, the first adhesive pasting component 200 includes a battery cell, and the sheet 100 includes a thermal insulation pad.

The embodiments of this disclosure can be applied to the process of adhering thermal insulation pads to battery cells. Since the first detection camera 3 and the second detection camera 4 can simultaneously detect multiple thermal insulation pads, the efficiency of release paper detection can be improved. When replacing with larger-sized thermal insulation pads and performing the paper stripping operation on the larger-sized thermal insulation pads, the spacing between the first detection camera 3 and the second detection camera 4 can be increased, to enlarge the shooting fields of view of the first detection camera 3 and the second detection camera 4, so that the at least two thermal insulation pads are within the shooting fields of view, thereby improving the compatibility of release paper detection without reducing the efficiency of release paper detection. Moreover, when replacing with smaller-sized thermal insulation pads and performing the paper stripping operation on the smaller-sized thermal insulation pads, the spacing between the first detection camera 3 and the second detection camera 4 can be reduced, to reduce the shooting fields of view of the first detection camera 3 and the second detection camera 4, and enlarge the overlapping shooting field of view of the first detection camera 3 and the second detection camera 4, so that a thermal insulation pad located in the overlapping shooting field of view is detected by both the first detection camera 3 and the second detection camera 4, which is beneficial to improving detection accuracy.

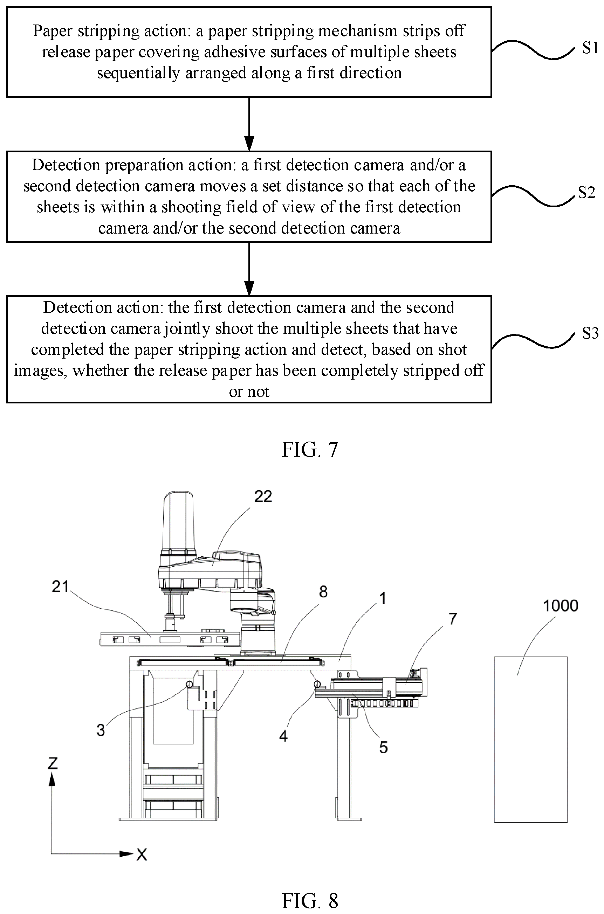

FIG. 7 is a schematic flowchart of a paper stripping method provided by some embodiments of this disclosure.

As shown in FIG. 7, a second aspect of this disclosure provides a paper stripping method using a paper stripping apparatus to perform a paper stripping operation on sheets 100, where the sheet 100 has an adhesive surface covered by release paper, and the paper stripping apparatus includes a base 1, a paper stripping mechanism 2, a first detection camera 3, and a second detection camera 4. The paper stripping method includes:
S1. Paper stripping action: the paper stripping mechanism strips off the release paper covering adhesive surfaces of the multiple sheets sequentially arranged along a first direction.
S2. Detection preparation action: the first detection camera and/or the second detection camera moves a set distance so that each of the sheets is within a shooting field of view of the first detection camera and/or the second detection camera.
S3. Detection action: the first detection camera and the second detection camera jointly shoot the multiple sheets that have completed the paper stripping action and detect, based on shot images, whether the release paper has been completely stripped or not.

In the paper stripping method, the first detection camera 3 and the second detection camera 4 simultaneously detect multiple sheets 100, which can improve the efficiency of release paper detection. When replacing with larger-sized sheets 100 and performing the paper stripping operation on the larger-sized sheets 100, the spacing between the first detection camera 3 and the second detection camera 4 can be increased, to enlarge the shooting fields of view of the first detection camera 3 and the second detection camera 4, so that at least two sheets 100 are within the shooting fields of view, thereby improving the compatibility of release paper detection without reducing the efficiency of release paper detection. Moreover, when replacing with smaller-sized sheets 100 and performing the paper stripping operation on the smaller-sized sheets 100, the spacing between the first detection camera 3 and the second detection camera 4 can be reduced, to reduce the shooting fields of view of the first detection camera 3 and the second detection camera 4, and enlarge the overlapping shooting field of view of the first detection camera 3 and the second detection camera 4, so that a sheet 100 located in the overlapping shooting field of view is detected by both the first detection camera 3 and the second detection camera 4, which is beneficial to improving detection accuracy.

In some embodiments of this disclosure, the sheet 100 has a first adhesive surface and a second adhesive surface, both the first adhesive surface and the second adhesive surface are covered by release paper, and in step S1, the paper stripping mechanism 2 is configured to strip off the release paper covering the first adhesive surface or the second adhesive surface.

The paper stripping method is used to strip off the first-surface release paper of the sheet 100.

In some embodiments of this disclosure, the sheet 100 has a first adhesive surface and a second adhesive surface, and the release paper covers the second adhesive surface. The first adhesive surface of the sheet 100 is adhered to a first adhesive pasting component 200. In step S1, the paper stripping mechanism 2 is configured to perform the paper stripping action on the sheet 100 adhered to the first adhesive pasting component 200 through the first adhesive surface, to strip off the release paper covering the second adhesive surface.

The paper stripping method is used to strip off the second-surface release paper of the sheet 100 adhered to the first adhesive pasting component 200.

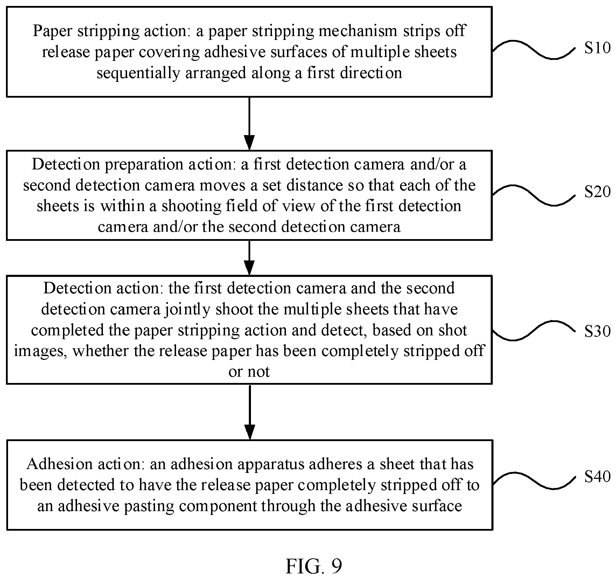

FIG. 8 is a structural schematic diagram of an adhesive pasting device provided by some embodiments of this disclosure. FIG. 9 is a schematic flowchart of an adhesive pasting method provided by some embodiments of this disclosure.

As shown in FIGs. 8 and 9, a third aspect of this disclosure provides an adhesive pasting method that uses an adhesive pasting device to adhere sheets 100 to an adhesive pasting component, the sheet 100 has an adhesive surface covered by release paper, the adhesive pasting device includes a paper stripping apparatus and an adhesion apparatus 1000, and the paper stripping apparatus includes a base 1, a paper stripping mechanism 2, a first detection camera 3, and a second detection camera 4. The adhesive pasting method includes:
S10. Paper stripping action: the paper stripping mechanism strips off the release paper covering adhesive surfaces of the multiple sheets sequentially arranged along a first direction.
S20. Detection preparation action: the first detection camera and/or the second detection camera moves a set distance so that each of the sheets is within a shooting field of view of the first detection camera and/or the second detection camera.
S30. Detection action: the first detection camera and the second detection camera jointly shoot the multiple sheets that have completed the paper stripping action and detect, based on shot images, whether the release paper has been completely stripped or not.
S40. Adhesion action: the adhesion apparatus adheres a sheet that has been detected to have the release paper completely stripped off to the adhesive pasting component through the adhesive surface.

In the adhesive pasting method, the first detection camera 3 and the second detection camera 4 simultaneously detect the multiple sheets 100, which can improve the efficiency of release paper detection. When replacing with larger-sized sheets 100 and performing the paper stripping operation on the larger-sized sheets 100, the spacing between the first detection camera 3 and the second detection camera 4 can be increased, to enlarge the shooting fields of view of the first detection camera 3 and the second detection camera 4, so that at least two sheets 100 are within the shooting fields of view, thereby improving the compatibility of release paper detection without reducing the efficiency of release paper detection. Moreover, when replacing with smaller-sized sheets 100 and performing the paper stripping operation on the smaller-sized sheets 100, the spacing between the first detection camera 3 and the second detection camera 4 can be reduced, to reduce the shooting fields of view of the first detection camera 3 and the second detection camera 4, and enlarge the overlapping shooting field of view of the first detection camera 3 and the second detection camera 4, so that a sheet 100 located in the overlapping shooting field of view is detected by both the first detection camera 3 and the second detection camera 4, which is beneficial to improving detection accuracy.

In some embodiments of this disclosure, the sheet 100 has a first adhesive surface and a second adhesive surface, and both the first adhesive surface and the second adhesive surface are covered by release paper. In step S10, the paper stripping mechanism 2 is configured to strip off the release paper covering the first adhesive surface or the second adhesive surface. In step S40, the adhesion apparatus 1000 adheres the sheet 100 that has been detected to have the release paper completely stripped off to the adhesive pasting component through the first adhesive surface or the second adhesive surface.

The adhesive pasting method is used to adhere the sheet 100 to one adhesive pasting component.

In some embodiments of this disclosure, the sheet 100 has a first adhesive surface and a second adhesive surface, and the release paper covers the second adhesive surface. The first adhesive surface of the sheet 100 is adhered to a first adhesive pasting component 200. In step S10, the paper stripping mechanism 2 is configured to perform the paper stripping action on the sheet 100 adhered to the first adhesive pasting component 200 through the first adhesive surface, to strip off the release paper covering the second adhesive surface. In step S40, the adhesion apparatus 1000 adheres the sheet 100 that has been detected to have the release paper completely stripped to a second adhesive pasting component through the second adhesive surface.

The paper stripping method is used to adhere the sheet 100 already adhered to the first adhesive pasting component 200 to the second adhesive pasting component, so that the sheet 100 is adhered between the first adhesive pasting component 200 and the second adhesive pasting component.

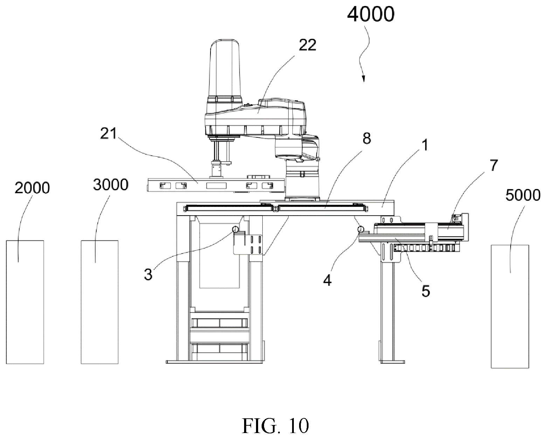

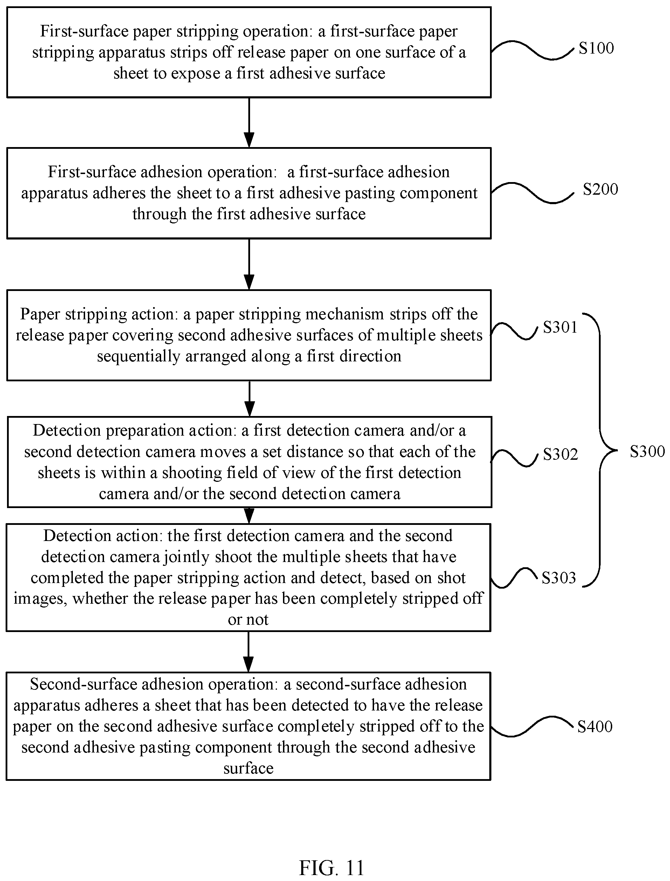

FIG. 10 is a structural schematic diagram of an adhesive pasting device provided by some other embodiments of this disclosure. FIG. 11 is a schematic flowchart of an adhesive pasting method provided by some other embodiments of this disclosure.

As shown in FIG. 10, a fourth aspect of this disclosure provides an adhesive pasting device. The adhesive pasting device includes a first-surface paper stripping apparatus 2000, a first-surface adhesion apparatus 3000, a second-surface adhesion apparatus 5000, and a paper stripping apparatus as a second-surface paper stripping apparatus 4000. The first-surface paper stripping apparatus 2000 is configured to strip off release paper on one surface of a sheet 100 to expose a second adhesive surface. The first-surface adhesion apparatus 3000 is configured to adhere the sheet 100 to a first adhesive pasting component 200 through the second adhesive surface. The paper stripping apparatus is configured to perform the paper stripping operation on the sheet 100 to strip off release paper on the other surface to expose a first adhesive surface. The second-surface adhesion apparatus 5000 is configured to adhere the sheet 100 to a second adhesive pasting component through the first adhesive surface.

The adhesive pasting device provided by the embodiments of this disclosure is configured to adhere the sheet 10 between the first adhesive pasting component 200 and the second adhesive pasting component. Since the adhesive pasting device includes the above paper stripping apparatus, the adhesive pasting device includes all the beneficial effects of the above paper stripping apparatus. Therefore, the adhesive pasting device improves the compatibility of release paper detection without reducing the efficiency of release paper detection, and improves detection accuracy.

As shown in FIGs. 10 and 11, a fifth aspect of this disclosure provides an adhesive pasting method that uses an adhesive pasting device to adhere a sheet 100 between a first adhesive pasting component 200 and a second adhesive pasting component, the sheet 100 has a first adhesive surface and a second adhesive surface respectively covered by release paper, the adhesive pasting device includes a first-surface paper stripping apparatus 2000, a first-surface adhesion apparatus 3000, a second-surface paper stripping apparatus 4000, and a second-surface adhesion apparatus 5000, and the second-surface paper stripping apparatus 4000 includes a base 1, a paper stripping mechanism 2, a first detection camera 3, and a second detection camera 4. The adhesive pasting method includes:
S100. First-surface paper stripping operation: the first-surface paper stripping apparatus strips off release paper on one surface of a sheet to expose the first adhesive surface.
S200. First-surface adhesion operation: the first-surface adhesion apparatus adheres the sheet to the first adhesive pasting component through the first adhesive surface.
S300. Second-surface paper stripping operation, where the second-surface paper stripping operation includes:
S301. Paper stripping action: the paper stripping mechanism strips off the release paper covering second adhesive surfaces of the multiple sheets sequentially arranged along a first direction.
S302. Detection preparation action: the first detection camera and/or the second detection camera moves a set distance so that each of the sheets is within a shooting field of view of the first detection camera and/or the second detection camera.
S303. Detection action: the first detection camera and the second detection camera jointly shoot the multiple sheets that have completed the paper stripping action and detect, based on shot images, whether the release paper has been completely stripped or not.
S400. Second-surface adhesion operation: the second-surface adhesion apparatus adheres a sheet that has been detected to have the release paper on the second adhesive surface completely stripped off to the second adhesive pasting component through the second adhesive surface.

The adhesive pasting method provided by the embodiments of this disclosure is configured to adhere the sheet between the first adhesive pasting component 200 and the second adhesive pasting component. In the adhesive pasting method, the first detection camera 3 and the second detection camera 4 can simultaneously detect multiple sheets 100, which can improve the efficiency of release paper detection. When replacing with larger-sized sheets 100 and performing the paper stripping operation on the larger-sized sheets 100, the spacing between the first detection camera 3 and the second detection camera 4 can be increased, to enlarge the shooting fields of view of the first detection camera 3 and the second detection camera 4, so that at least two sheets 100 are within the shooting fields of view, thereby improving the compatibility of release paper detection without reducing the efficiency of release paper detection. Moreover, when replacing with smaller-sized sheets 100 and performing the paper stripping operation on the smaller-sized sheets 100, the spacing between the first detection camera 3 and the second detection camera 4 can be reduced, to reduce the shooting fields of view of the first detection camera 3 and the second detection camera 4, and enlarge the overlapping shooting field of view of the first detection camera 3 and the second detection camera 4, so that a sheet 100 located in the overlapping shooting field of view is detected by both the first detection camera 3 and the second detection camera 4, which is beneficial to improving detection accuracy.

The above embodiments are only for illustrating instead of limiting the technical solutions of this disclosure. Although this disclosure has been described in detail with reference to the foregoing embodiments, those of ordinary skill in the art should understand that they can still modify the technical solutions recorded in the foregoing embodiments or equivalently replace some or all of the technical features thereof. These modifications or replacements do not make the essence of the corresponding technical solutions depart from the scope of the technical solutions of the embodiments of this disclosure, and they should all be covered within the scope of the description of this disclosure. In particular, as long as there is no structural conflict, the technical features mentioned in the various embodiments can be combined in any way.

### Industrial applicability

This disclosure provides the paper stripping apparatus, the paper stripping method, the adhesive pasting device, and the adhesive pasting method that improve the compatibility of release paper detection without reducing the efficiency of release paper detection. Since the first detection camera and the second detection camera can simultaneously detect multiple thermal insulation pads, the efficiency of release paper detection can be improved. When replacing with larger-sized thermal insulation pads and performing a paper stripping operation on the larger-sized thermal insulation pads, the spacing between the first detection camera and the second detection camera can be increased, to enlarge the shooting fields of view of the first detection camera and the second detection camera, so that the at least two thermal insulation pads are within the shooting fields of view, thereby improving the compatibility of release paper detection without reducing the efficiency of release paper detection. Moreover, when replacing with smaller-sized thermal insulation pads and performing a paper stripping operation on the smaller-sized thermal insulation pads, the spacing between the first detection camera and the second detection camera can be reduced, to reduce the shooting fields of view of the first detection camera and the second detection camera, and enlarge the overlapping shooting field of view of the first detection camera and the second detection camera, so that a thermal insulation pad located in the overlapping shooting field of view is detected by both the first detection camera and the second detection camera. Therefore, this is beneficial to improving detection accuracy.

## Claims

1. A paper stripping apparatus configured to perform a paper stripping operation on at least two sheets, wherein the sheet has an adhesive surface covered by release paper, and
the paper stripping operation comprises a paper stripping action of stripping the release paper from the adhesive surface and a detection action of detecting whether the release paper after the paper stripping action has been completely stripped or not; and
the paper stripping apparatus comprises:
a base;
a paper stripping mechanism disposed on the base, wherein the paper stripping mechanism is configured to perform the paper stripping action on the at least two sheets sequentially arranged along a first direction;
a first detection camera disposed on the base; and
a second detection camera disposed on the base and located on a side of the first detection camera along the first direction, wherein the first detection camera and the second detection camera are configured to be able to approach or move away from each other so that each of the sheets is within shooting fields of view of the first detection camera and the second detection camera; wherein
the first detection camera and the second detection camera are configured to jointly perform the detection action on the multiple sheets.

2. The paper stripping apparatus according to claim 1, wherein the shooting field of view of the first detection camera is a first shooting field of view, the shooting field of view of the second detection camera is a second shooting field of view, the first shooting field of view and the second shooting field of view jointly form a shooting range and the first shooting field of view and the second shooting field of view have an overlapping portion, and each of the sheets is within the shooting range.

3. The paper stripping apparatus according to claim 1 or 2, wherein the first detection camera and the second detection camera approach or move away from each other so that a midpoint between the first detection camera and the second detection camera is located in a median plane of a region occupied by all the sheets.

4. The paper stripping apparatus according to claim 3, wherein the paper stripping apparatus further comprises a control module, the control module determines a position of the median plane based on a position and size of the sheet in the first direction, calculates a distance that the first detection camera and/or the second detection camera needs to move based on positions of the first detection camera and the second detection camera, and controls the first detection camera and/or the second detection camera to move.

5. The paper stripping apparatus according to claim 4, wherein along the first direction, the sheet at the head is a first sheet, the sheet at the tail is a second sheet, an end surface of the first sheet away from the second sheet is a first reference surface, an end surface of the second sheet away from the first sheet is a second reference surface, and a plane at an intermediate position between the first reference surface and the second reference surface is the median plane; and
the control module calculates a position of the median plane based on positions of the first reference surface and the second reference surface.

6. The paper stripping apparatus according to any one of claims 1 to 5, wherein the first detection camera is fixedly disposed on the base, and the second detection camera is disposed on the base and capable of moving the first direction.

7. The paper stripping apparatus according to any one of claims 2 to 6, wherein the paper stripping apparatus further comprises an illumination lamp, and the illumination lamp is disposed on the base such that an illumination range of the illumination lamp comprises the shooting range.

8. The paper stripping apparatus according to any one of claims 1 to 5, wherein the paper stripping mechanism comprises a clamp, the clamp comprises multiple clamping assemblies sequentially arranged along the first direction, and the multiple clamping assemblies are configured to clamp the release paper of the multiple sheets in a one-to-one correspondence.

9. The paper stripping apparatus according to claim 8, wherein the clamping assembly comprises:
a connector disposed on the base;
a first clamping plate disposed on the connector; and
a second clamping plate disposed on the connector;
wherein the first clamping plate and the second clamping plate are capable of approaching or moving away from each other to clamp or release the release paper.

10. The paper stripping apparatus according to claim 9, wherein the clamping assembly further comprises a second driving member, the second driving member is disposed on the connector, and the second driving member is configured to drive the first clamping plate and/or the second clamping plate to approach or move away from each other.

11. The paper stripping apparatus according to claim 9 or 10, wherein the multiple connectors are connected to each other to form a connection frame.

12. The paper stripping apparatus according to any one of claims 9 to 11, wherein the first clamping plate is fixedly connected to the connector, and the second clamping plate is capable of approaching or moving away from the first clamping plate under the drive of the second driving member.

13. The paper stripping apparatus according to any one of claims 8 to 12, wherein the paper stripping mechanism further comprises a movement mechanism, the movement mechanism is disposed on the base, the clamp is connected to the movement mechanism, and the movement mechanism is configured to drive the clamp to approach or move away from the sheet.

14. The paper stripping apparatus according to claim 13, wherein the movement mechanism comprises a multi-axis robot.

15. The paper stripping apparatus according to any one of claims 1 to 14, wherein the sheet has a first adhesive surface and a second adhesive surface, and the release paper covers the second adhesive surface, and
the paper stripping mechanism is configured to perform the paper stripping action on the sheet adhered to a first adhesive pasting component through the first adhesive surface to strip the release paper covering the second adhesive surface.

16. The paper stripping apparatus according to claim 15, wherein the paper stripping apparatus further comprises a positioning mechanism configured to position the first adhesive pasting component; and
the positioning mechanism comprises at least two positioning structures sequentially spaced along the first direction, and each of the positioning structures is configured to limit the position of the first adhesive pasting component in a one-to-one correspondence.

17. The paper stripping apparatus according to claim 16, wherein the positioning structure comprises a bearing portion, a positioning block, and a pushing block, the bearing portion defines a bearing region, the positioning block and the pushing block are respectively disposed on two opposite sides of the bearing region along the first direction, and the pushing block is configured to approach or move away from the corresponding positioning block along the first direction to clamp or release the first adhesive pasting component located in the bearing region.

18. The paper stripping apparatus according to claim 17, wherein the first adhesive pasting component comprises a battery cell, and the sheet comprises a thermal insulation pad.

19. A paper stripping method using a paper stripping apparatus to perform a paper stripping operation on sheets, wherein the sheet has an adhesive surface covered by release paper, the paper stripping apparatus comprises a base, a paper stripping mechanism, a first detection camera, and a second detection camera, and the paper stripping method comprises:
a paper stripping action, wherein the paper stripping mechanism strips off the release paper covering the adhesive surfaces of the multiple sheets sequentially arranged along a first direction;
a detection preparation action, wherein the first detection camera and/or the second detection camera moves a set distance so that each of the sheets is within a shooting field of view of the first detection camera and/or the second detection camera; and
a detection action, wherein the first detection camera and the second detection camera jointly shoot the multiple sheets that have completed the paper stripping action and detect, based on shot images, whether the release paper has been completely stripped or not.

20. An adhesive pasting method that uses an adhesive pasting device to adhere sheets to an adhesive pasting component, the sheet has an adhesive surface covered by release paper, the adhesive pasting device comprises a paper stripping apparatus and an adhesion apparatus, the paper stripping apparatus comprises a base, a paper stripping mechanism, a first detection camera, and a second detection camera, and the adhesive pasting method comprises:
a paper stripping action, wherein the paper stripping mechanism strips off the release paper covering adhesive surfaces of multiple sheets sequentially arranged along a first direction;
a detection preparation action, wherein the first detection camera and/or the second detection camera moves a set distance so that each of the sheets is within a shooting field of view of the first detection camera and/or the second detection camera;
a detection action, wherein the first detection camera and the second detection camera jointly shoot the multiple sheets that have completed the paper stripping action and detect, based on shot images, whether the release paper has been completely stripped or not; and
an adhesion action, wherein the adhesion apparatus adheres a sheet that has been detected to have the release paper completely stripped off to the adhesive pasting component through the adhesive surface.

21. An adhesive pasting device, comprising:
a first-surface paper stripping apparatus configured to strip off release paper on one surface of a sheet to expose a first adhesive surface;
a first-surface adhesion apparatus configured to adhere the sheet to a first adhesive pasting component through the first adhesive surface;
the paper stripping apparatus according to any one of claims 1 to 18 as a second-surface paper stripping apparatus, wherein the paper stripping apparatus is configured to perform the paper stripping operation on the sheet to strip off release paper on the other surface to expose a second adhesive surface; and
a second-surface adhesion apparatus configured to adhere the sheet to a second adhesive pasting component through the second adhesive surface.

22. An adhesive pasting method that uses an adhesive pasting device to adhere a sheet between a first adhesive pasting component and a second adhesive pasting component, the sheet has a first adhesive surface and a second adhesive surface respectively covered by release paper, the adhesive pasting device comprises a first-surface paper stripping apparatus, a first-surface adhesion apparatus, a second-surface paper stripping apparatus, and a second-surface adhesion apparatus, the second-surface paper stripping apparatus comprises a base, a paper stripping mechanism, a first detection camera, and a second detection camera, and the adhesive pasting method comprises:
a first-surface paper stripping operation, wherein the first-surface paper stripping apparatus strips off release paper on one surface of the sheet to expose the first adhesive surface;
a first-surface adhesion operation, wherein the first-surface adhesion apparatus adheres the sheet to the first adhesive pasting component through the first adhesive surface;
a second-surface paper stripping operation, wherein the second-surface paper stripping operation comprises:
a paper stripping action, wherein the paper stripping mechanism strips off the release paper covering second adhesive surfaces of multiple sheets sequentially arranged along a first direction,
a detection preparation action, wherein the first detection camera and/or the second detection camera moves a set distance so that each of the sheets is within a shooting field of view of the first detection camera and/or the second detection camera, and
a detection action, wherein the first detection camera and the second detection camera jointly shoot the multiple sheets that have completed the paper stripping action and detect, based on shot images, whether the release paper has been completely stripped or not; and
a second-surface adhesion operation, wherein the second-surface adhesion apparatus adheres a sheet that has been detected to have the release paper on the second adhesive surface completely stripped off to the second adhesive pasting component through the second adhesive surface.
